# EUROPÄISCHE PATENTSCHRIFT

(11) **EP 4 359 279 B1**
(45) Veröffentlichungstag und Bekanntmachung des Hinweises auf die Patenterteilung: **12.03.2025**
(21) Anmeldenummer: 22730229.6
(22) Anmeldetag: 23.05.2022
(51) Int. Cl.: B60W 50/00, B60W 60/00, B60Q 1/50, B60W 30/14, G08G 1/16

(54) **VERFAHREN ZUM BETRIEB EINES FAHRZEUGES**
METHOD FOR OPERATING A VEHICLE
PROCÉDÉ DE FONCTIONNEMENT D'UN VÉHICULE

(30) Priorität: 25.06.2021 DE 102021003284
(43) Veröffentlichungstag der Anmeldung: 01.05.2024
(73) Patentinhaber: Mercedes-Benz Group AG, 70372 Stuttgart (DE)
(72) Erfinder: KÄFER, Eugen, 71272 Renningen (DE)
(74) Vertreter: Novagraaf Group
(86) Internationale Anmeldenummer: PCT/EP2022/063939
(87) Internationale Veröffentlichungsnummer: WO 2022/268425

(56) Entgegenhaltungen:
- EP-A2- 3 552 901
- DE-A1- 102018 222 720
- US-A1- 2019 389 487

## Beschreibung

Die Erfindung betrifft ein Verfahren zum Betrieb eines Fahrzeuges im automatisierten Fahrbetrieb gemäß dem Oberbegriff des Patentanspruchs 1.

Ein derartiges Verfahren ist aus der US 2019/389 487 A1 bekannt. Bei diesem bekannten Verfahren wird ein Fahrzeugrückraum eines automatisiert fahrenden Fahrzeugs überwacht und ermittelt, ob ein Abstand zu einem nachfolgenden Fahrzeug ausreicht, um dem nachfolgenden Fahrzeug ein sicheres Anhalten zu ermöglichen. Wenn das nicht der Fall ist, wird ein entsprechender Hinweis an einen Fahrer des Fahrzeugs und an das nachfolgende Fahrzeug ausgegeben.

Aus der DE 10 2018 222 720 A1 ein Steuerungssystem zur Steuerung eines autonomen oder automatisierten Fahrzeugs bekannt, wobei das Steuerungssystem eine auf einer künstlichen Intelligenz basierende erste Steuerungsvorrichtung und eine auf deterministischen Berechnungsvorschriften basierende zweite Steuerungsvorrichtung aufweist und wobei eine Kritikalität einer Fahrsituation bestimmt wird und in Abhängigkeit der bestimmten Kritikalität eine Umschaltung von der ersten Steuerungsvorrichtung auf die zweite Steuerungsvorrichtung vorgenommen wird.

Aus der EP 3 552 901 A2 ist ein Verfahren zum Betreiben eines Fahrzeugs in einem automatisierten Fahrbetrieb bekannt, wobei vorgesehen ist, dass ein Fahrer des Fahrzeugs bei Detektion bestimmter Ereignisse zur Übernahme der Fahraufgabe aufgefordert wird, und dass ein Minimal-Risiko-Manöver gefahren wird, falls der Fahrer die Fahraufgabe nicht übernimmt.

Aus der DE 10 2018 204 572 A1 sind eine Steuereinheit eines Fahrzeuges und ein Verfahren zum Schutz des Fahrzeuges vor einem Auffahrunfall bekannt. Das Fahrzeug weist eine Notbremsfunktion auf, die eingerichtet ist, automatisch eine Notbremsung des Fahrzeuges zu bewirken. Das Verfahren sieht vor, dass mittels der Steuereinheit bestimmt wird, dass eine erhöhte Wahrscheinlichkeit für ein automatisches Auslösen einer Notbremsung besteht. In Reaktion darauf wird zumindest ein Warnsignal generiert, um ein Folgefahrzeug zu veranlassen, einen ausreichend hohen Sicherheitsabstand zu dem Fahrzeug einzuhalten.

Darüber hinaus beschreibt die DE 103 28 755 A1 ein System zur Vermeidung eines zu geringen Abstandes von einem Folgefahrzeug zu einem vorausfahrenden Fahrzeug, insbesondere einem Kraftfahrzeug. Dazu ist vorgesehen, dass das vorausfahrende Fahrzeug eine Einrichtung zur Ermittlung des Abstandes zum Folgefahrzeug und zur Ermittlung der Relativgeschwindigkeit in Bezug auf das Folgefahrzeug aufweist, und dass auf Grundlage des ermittelten Abstandes und der Relativgeschwindigkeit ein Mindestabstand ermittelt wird und bei Unterschreiten des Mindestabstandes Maßnahmen zur Vermeidung einer weiteren Verringerung des Abstandes durchgeführt werden, zwecks Vermeidung eines möglichen Auffahrunfalles.

Der Erfindung liegt die Aufgabe zugrunde, ein Verfahren zum Betrieb eines Fahrzeuges im automatisierten Fahrbetrieb anzugeben.

Die Aufgabe wird erfindungsgemäß durch ein Verfahren gelöst, welches die in Anspruch 1 angegebenen Merkmale aufweist.

Vorteilhafte Ausgestaltungen der Erfindung sind Gegenstand der Unteransprüche.

Ein Verfahren zum Betrieb eines Fahrzeuges im automatisierten Fahrbetrieb sieht erfindungsgemäß vor, dass ein Fahrzeugrückraum des Fahrzeuges kontinuierlich überwacht wird. Im Fall einer erfassten kritischen Annäherung eines nachfolgenden Fahrzeuges an das Fahrzeug wird ein Warnhinweis an das nachfolgende Fahrzeug ausgegeben und im Fall, dass sich das nachfolgende Fahrzeug nach einer vorgebbaren Zeitdauer dem Fahrzeug weiterhin kritisch nähert, eine Übernahmeaufforderung in Bezug auf eine Fahraufgabe an einen Fahrzeugnutzer des Fahrzeuges ausgegeben wird.

Durch Anwendung des Verfahrens kann das Risiko eines Unfalles zwischen dem Fahrzeug und dem nachfolgenden Fahrzeug verringert werden.

Das Verfahren stellt eine Methode dar, das nachfolgende Fahrzeug präventiv auf einen adäquaten Abstand zu dem Fahrzeug hinzuweisen, so dass der Abstand zu dem Fahrzeug erhöht werden kann und ein Fahrer des nachfolgenden Fahrzeuges somit die Möglichkeit hat, auf ein unerwartetes Bremsmanöver des Fahrzeuges, beispielsweise wegen eines fehlerhaft detektierten Hindernisses, eines sogenannten Falschobjektes oder Geisterobjektes, zu reagieren. Das Verfahren stellt also eine zusätzliche Absicherung vor einer Kollision mit dem nachfolgenden Fahrzeug aufgrund einer Falschbremsung des im automatisierten Fahrbetrieb fahrenden Fahrzeuges dar.

Der Abstand zwischen den beiden Fahrzeugen, insbesondere ein Sicherheitsabstand, der es ermöglicht, dass das nachfolgende Fahrzeug auf eine Notbremsung des Fahrzeuges reagieren kann, ist dabei geschwindigkeitsabhängig, da sich ein Bremsweg des nachfolgenden Fahrzeuges bei zunehmender Fahrgeschwindigkeit erhöht.

Wird das Verfahren angewendet, kann die Akzeptanz gegenüber dem automatisierten Fahrbetrieb von Fahrzeugen, welche gegebenenfalls Unzulänglichkeiten aufweisen, gesteigert werden.

In einer Ausführung des Verfahrens wird im Fall, dass eine Übernahme der Fahraufgabe nach einer vorgebbaren weiteren Zeitdauer nicht erfolgt ist, eine momentane Fahrgeschwindigkeit des Fahrzeuges um einen vorgebbaren Wert verringert, bis die kritische Annäherung zwischen dem nachfolgenden Fahrzeug und dem Fahrzeug nicht mehr besteht. Beispielsweise erfolgt keine Übernahme, da das Fahrzeug fahrerlos fährt oder ein Fahrzeugnutzer, beispielsweise aufgrund eines Notfalles, nicht in der Lage ist, die Fahraufgabe manuell auszuführen.

Das Fahrzeug verringert seine Fahrgeschwindigkeit insbesondere, um dem nachfolgenden Fahrzeug dadurch ein Angebot zu signalisieren, das Fahrzeug zu überholen oder nochmals darauf hinzuweisen, dass sich das nachfolgende Fahrzeug dem Fahrzeug kritisch angenähert hat und so nicht in der Lage ist, auf einen abrupten Bremsvorgang des Fahrzeuges zu reagieren. Durch Verringerung der Geschwindigkeit kann weiterhin insbesondere auch eine Gefahr der Erfassung von Geisterzielen verringert werden.

In einer weiteren möglichen Ausführung des Verfahrens wird das Fahrzeug nach Ablauf der weiteren Zeitdauer derart gesteuert, dass dieses sich bei Rechtsverkehr in einem rechten Randbereich innerhalb seiner Fahrspur oder bei Linksverkehr in einem linken Randbereich innerhalb seiner Fahrspur einordnet. Insbesondere führt das Fahrzeug dabei seinen automatisierten Fahrbetrieb mit der verringerten Fahrgeschwindigkeit fort. Dieser Vorgang wird also durchgeführt, wenn der Übernahmeaufforderung nicht Folge geleistet wird und das Fahrzeug seine Fahrgeschwindigkeit um den vorgegebenen Wert verringert. Insbesondere fährt das Fahrzeug an eine rechte bzw. linke Fahrspurmarkierung und verringert seine Fahrgeschwindigkeit, so dass dem nachfolgenden Fahrzeug signalisiert wird, das Fahrzeug zu überholen, und sich das nachfolgende Fahrzeug dem Fahrzeug somit nicht mehr kritisch annähern kann. Das nachfolgende Fahrzeug stellt dann also kein Auffahrrisiko mehr für das Fahrzeug dar, wenn dieses, insbesondere aufgrund eines fehlerfassten Objektes, eine abrupte Bremsung einleitet.

Der Warnhinweis an das nachfolgende Fahrzeug kann in einer Weiterbildung des Fahrzeuges als Textnachricht auf einer heckseitig angeordneten Anzeigeeinheit des Fahrzeuges ausgegeben werden. Insbesondere umfasst die Textnachricht eine Bitte, den Abstand des nachfolgenden Fahrzeuges zu dem Fahrzeug zu vergrößern.

In einer alternativen oder zusätzlichen Ausführungsform wird der Warnhinweis mittels einer Fahrzeug-zu-Fahrzeugkommunikation an das nachfolgende Fahrzeug ausgegeben. Dadurch ist es möglich, dass der Fahrer des nachfolgenden Fahrzeuges direkt bewarnt wird, d. h. der Warnhinweis direkt an den Fahrer des nachfolgenden Fahrzeuges ausgegeben wird. Der Warnhinweis ist somit direkt an den Fahrer des nachfolgenden Fahrzeuges adressiert.

In einer weiteren Ausführung des Verfahrens beträgt die Zeitdauer, bevor die Übernahmeaufforderung in dem Fahrzeug ausgegeben wird, mindestens 30 Sekunden. D. h., dass die Ausgabe der Übernahmeforderung frühestens 30 Sekunden nachdem der Warnhinweis an das nachfolgende Fahrzeug oder in dem nachfolgenden Fahrzeug ausgegeben wird, erfolgt. Dem nachfolgenden Fahrzeug werden also mindestens 30 Sekunden und somit eine ausreichende Zeitdauer zur Verfügung gestellt, auf den Warnhinweis des Fahrzeuges zu reagieren und den Abstand zu dem automatisiert fahrenden Fahrzeug zu erhöhen.

Ausführungsbeispiele der Erfindung werden im Folgenden anhand einer Zeichnung näher erläutert.

Dabei zeigen:
- Fig. 1: schematisch einen Fahrbahnabschnitt mit zwei gegenläufigen Fahrspuren, einem automatisiert fahrenden Fahrzeug, einem nachfolgenden Fahrzeug, einem entgegenkommenden Fahrzeug und einem Geisterobjekt und
- Fig. 2: schematisch einen Fahrbahnabschnitt mit zwei gegenläufigen Fahrspuren, dem automatisiert fahrenden Fahrzeug, dem nachfolgenden Fahrzeug und dem Geisterobjekt bei Anwendung eines Verfahrens zur Verringerung einer Auffahrkollision.

Einander entsprechende Teile sind in allen Figuren mit den gleichen Bezugszeichen versehen.

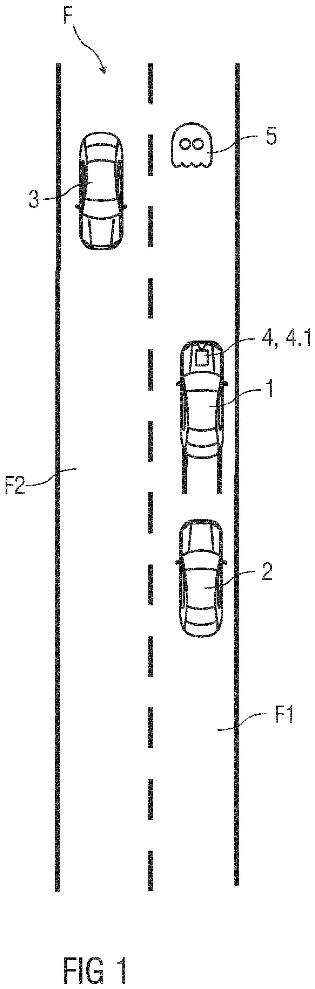

Figur 1 zeigt einen Fahrbahnabschnitt F mit zwei gegenläufigen Fahrspuren F1, F2. Auf einer rechten Fahrspur F1 fährt ein Fahrzeug 1 im automatisierten Fahrbetrieb und ein dem Fahrzeug 1 nachfolgendes Fahrzeug 2. Auf einer linken Fahrspur F2 befindet sich ein entgegenkommendes Fahrzeug 3.

Das Fahrzeug 1 verfügt über ein Assistenzsystem zum automatisierten Fahrbetrieb, wobei das Fahrzeug 1, insbesondere das Assistenzsystem, vollumfänglich eine Fahraufgabe ausführt, so dass ein Fahrzeugnutzer während des automatisierten Fahrbetriebes einer anderen Tätigkeit nachgehen kann.

Das Assistenzsystem umfasst eine Umgebungssensorik mit einer Anzahl von im und/oder am Fahrzeug 1 angeordneten Erfassungseinheiten, von denen zumindest ein als Sensorsystem 4 ausgeführt ist und eine Kamera 4.1 umfasst. Das Sensorsystem 4 in Form der Kamera 4.1 ist derart in oder an dem Fahrzeug 1 angeordnet, dass ein nicht näher gezeigter Erfassungsbereich vor das Fahrzeug 1 gerichtet ist und somit ein Bereich des dem Fahrzeug 1 vorausliegenden Fahrbahnabschnittes F erfasst wird.

Anhand erfasster Signale der Umgebungssensorik und somit auch der Kamera 4.1 werden Hindernisse in einer Umgebung des Fahrzeuges 1 detektiert. Mittels einer Steuereinheit der Umgebungssensorik wird eine Kritikalität einer vorliegenden Situation, insbesondere in Bezug auf ein erfasstes Hindernis, ermittelt. In Abhängigkeit der ermittelten Kritikalität, insbesondere wenn diese eine vorgegebene Schwelle überschreitet, wird ein Bremsvorgang des Fahrzeuges 1 eingeleitet, um beispielsweise ein Kollisionsrisiko für das Fahrzeug 1 und das Hindernis zu verringern.

Mitunter kann eine Situation eintreten, dass mittels des Sensorsystems 4 ein Falschobjekt 5, d. h. ein sogenanntes Geisterobjekt, detektiert wird. Bei einem solchen Falschobjekt handelt es sich um ein Objekt und somit um ein Hindernis, welches von dem Sensorsystem 4 erfasst wird, aber in der Realität nicht existiert. Ein solches Falschobjekt 5 führt im automatisierten Fahrbetrieb des Fahrzeuges 1 zu einem falsch eingeleiteten Bremsvorgang. D. h., dass das Fahrzeug 1 ohne einen von außen nachvollziehbaren Grund einen Bremsvorgang, z. B. eine Notbremsung, einleitet.

Ein solch eingeleiteter Bremsvorgang auf ein Falschobjekt 5, ein sogenannter Falsch-Positiv-Fehler, kann zu einem Auffahrunfall zwischen dem Fahrzeug 1 und dem nachfolgenden Fahrzeug 2 führen. Insbesondere besteht das Risiko eines Auffahrunfalles, wenn das nachfolgende Fahrzeug keinen ausreichend großen Abstand zu dem Fahrzeug 1 hält, sich diesem also kritisch annähert.

Mit einem ausreichend großen Abstand zwischen dem Fahrzeug 1 und dem nachfolgenden Fahrzeug 2 kann ein solcher Auffahrunfall vermieden werden. Für das im automatisierten Fahrbetrieb fahrende Fahrzeug 1 ist nicht direkt möglich, den ausreichend großen Abstand zu dem nachfolgenden Fahrzeug 2 einzustellen, da eine Abstandsregelung durch das nachfolgende Fahrzeug 2 realisiert wird.

Um dennoch das Risiko eines solchen auf einem unzureichenden Abstand zwischen dem Fahrzeug 1 und dem nachfolgenden Fahrzeug 2 basierenden Auffahrunfall erheblich zu verringern, ist ein im Folgenden beschriebenes Verfahren vorgesehen.

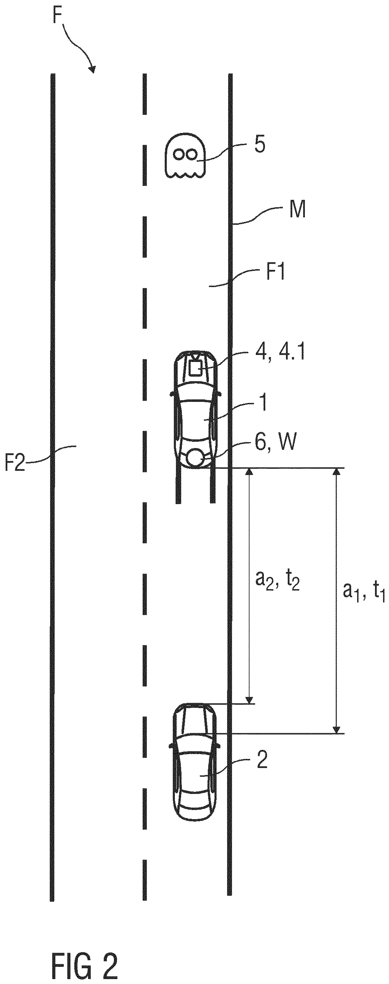

Figur 2 zeigt einen Fahrbahnabschnitt F mit zwei gegenläufigen Fahrspuren F1, F2, wobei auf der rechten Fahrspur F1 das Fahrzeug 1 im automatisierten Fahrbetrieb fährt und sich hinter dem Fahrzeug 1 ein nachfolgendes Fahrzeug 2 fährt, welches sich dem Fahrzeug 1 kritisch von hinten nähert.

Die Umgebungssensorik umfasst zumindest eine Erfassungseinheit, beispielsweise eine radarbasierte Erfassungseinheit, die zumindest während des automatisierten Fahrbetriebes des Fahrzeuges 1 einen Fahrzeugrückraum, d. h. einen Bereich hinter dem Fahrzeug 1, überwacht.

Wird das nachfolgende Fahrzeug 2 anhand erfasster Signale der Umgebungssensorik detektiert, wird ein Abstand a₁ und somit eine Zeitlücke t₁ ermittelt, die das nachfolgende Fahrzeug 2 zur Vermeidung eines Auffahrunfalles üblicherweise benötigt, wenn das Fahrzeug 1 aufgrund eines erfassten Falschobjektes 5, eine Falschbremsung einleitet. Dieser Abstand a₁ und die Zeitlücke t₁ können insbesondere geschwindigkeitsabhängig sein.

Hat sich das nachfolgende Fahrzeug 2 dem Fahrzeug 1 derart kritisch genähert, so dass ein weiterer Abstand a₂ und eine weitere Zeitlücke t₂ nicht ausreichend sind, dass ein Auffahrunfall zwischen dem nachfolgenden Fahrzeug 2 und dem Fahrzeug 1 bei einer von diesem eingeleiteten Falschbremsung wegen eines erfassten Falschobjektes 5 unvermeidbar ist, wird von dem Fahrzeug 1 ein Warnhinweis an das nachfolgende Fahrzeug 2 ausgegeben.

In einer Ausführung wird der Warnhinweis W des Fahrzeuges an das nachfolgende Fahrzeug 2 mittels einer angezeigten Textnachricht ausgegeben. Dazu ist im Heckbereich des Fahrzeuges 1 eine Anzeigeeinheit 6 angeordnet. Insbesondere beinhaltet die Textnachricht eine Bitte, den momentanen weiteren Abstand a₂ des nachfolgenden Fahrzeuges 2 zu dem Fahrzeug 1 zu vergrößern, wenn der Abstand a₁ und somit die Zeitlücke t₁ unterschritten werden.

Alternativ oder zusätzlich wird der Warnhinweis W mittels einer Fahrzeug-zu-Fahrzeugkommunikation an das nachfolgende Fahrzeug 2 übermittelt und in diesem ausgegeben. Ein Fahrer des nachfolgenden Fahrzeuges 2 wird hierdurch direkt, insbesondere über ein Assistenzsystem zur aktiven Sicherheit, bewarnt.

Nähert sich das nachfolgende Fahrzeug 2 dem Fahrzeug 1 weiterhin kritisch, wobei der Abstand a₁ und die Zeitlücke t₁ unterschritten werden, wird nach einer vorgebbaren Zeitdauer von beispielsweise 30 Sekunden, eine Übernahmeaufforderung in dem Fahrzeug 1 ausgegeben, so dass ein Fahrzeugnutzer des Fahrzeuges 1 eine Fahraufgabe des Fahrzeuges 1 manuell ausführt.

Ist die Übernahme der Fahraufgabe nach Ablauf einer weiteren Zeitdauer nicht erfolgt, beispielsweise weil sich in dem Fahrzeug 1 kein Fahrzeugnutzer befindet oder der Fahrzeugnutzer aufgrund eines Notfalles die Fahraufgabe nicht ausführen kann, verringert das Fahrzeug 1 seine momentane Fahrgeschwindigkeit um einen vorgegebenen Wert. Dadurch wird dem nachfolgenden Fahrzeug 2 signalisiert, das Fahrzeug 1 unter Berücksichtigung zumindest eines Gegenverkehrs zu überholen.

Zusätzlich kann vorgesehen sein, dass das Fahrzeug 1 nach Ablauf der weiteren Zeitdauer sich im Bereich einer rechten Fahrspurmarkierung M innerhalb seiner Fahrspur F1 einordnet und seinen automatisierten Fahrbetrieb dort mit der verringerten Fahrgeschwindigkeit fortsetzt. Durch die Einordnung im Bereich der rechten Fahrspurmarkierung M und der verringerten Fahrgeschwindigkeit wird das nachfolgende Fahrzeug 2 dazu aufgefordert, einen Überholvorgang durchzuführen, ohne weitere Verkehrsteilnehmer zu gefährden.

Hat das nachfolgende Fahrzeug 2 das Fahrzeug 1 überholt oder den weiteren Abstand a₂ mindestens auf den Abstand a₁ erhöht, positioniert sich das Fahrzeug 1 in Bezug auf seine rechte Fahrspur F1 mittig und erhöht die momentane Fahrgeschwindigkeit auf einen für den automatisierten Fahrbetrieb zulässige Fahrgeschwindigkeit, insbesondere auf eine für den Fahrbahnabschnitt geltende Fahrgeschwindigkeit.

## Patentansprüche

1. Verfahren zum Betrieb eines Fahrzeuges (1) im automatisierten Fahrbetrieb, wobei
- ein Fahrzeugrückraum des Fahrzeuges (1) kontinuierlich überwacht wird,
- im Fall einer erfassten kritischen Annäherung eines nachfolgenden Fahrzeuges (2) an das Fahrzeug (1) ein Warnhinweis (W) an das nachfolgende Fahrzeug (2) ausgegeben wird
**dadurch gekennzeichnet,**
- **dass** im Fall, dass sich das nachfolgende Fahrzeug (2) nach einer vorgebbaren Zeitdauer dem Fahrzeug (1) weiterhin kritisch nähert, eine Übernahmeaufforderung in Bezug auf eine Fahraufgabe an einen Fahrzeugnutzer des Fahrzeuges (1) ausgegeben wird.

2. Verfahren nach Anspruch 1,
**dadurch gekennzeichnet, dass** im Fall, dass eine Übernahme der Fahraufgabe nach einer vorgebbaren weiteren Zeitdauer nicht erfolgt ist, eine momentane Fahrgeschwindigkeit des Fahrzeuges (1) um einen vorgebbaren Wert verringert wird, bis die kritische Annäherung zwischen dem nachfolgenden Fahrzeug (2) und dem Fahrzeug (1) nicht mehr besteht

3. Verfahren nach Anspruch 2,
**dadurch gekennzeichnet, dass** das Fahrzeug (1) nach Ablauf der weiteren Zeitdauer derart gesteuert wird, dass dieses sich bei Rechtsverkehr in einem rechten Randbereich innerhalb seiner Fahrspur (F1) oder bei Linksverkehr in einem linken Randbereich innerhalb seiner Fahrspur (F2) einordnet.

4. Verfahren nach einem der vorhergehenden Ansprüche,
**dadurch gekennzeichnet, dass** der Warnhinweis (W) an das nachfolgende Fahrzeug (2) als Textnachricht auf einer heckseitig angeordneten Anzeigeeinheit (6) des Fahrzeuges (1) ausgegeben wird.

5. Verfahren nach einem der vorhergehenden Ansprüche,
**dadurch gekennzeichnet, dass** der Warnhinweis (W) mittels einer Fahrzeug-zu-Fahrzeugkommunikation an das nachfolgende Fahrzeug (2) übertragen wird.

6. Verfahren nach einem der vorhergehenden Ansprüche,
**dadurch gekennzeichnet, dass** die Zeitdauer, bevor die Übernahmeaufforderung in dem Fahrzeug (1) ausgegeben wird, mindestens 30 Sekunden beträgt.

## Claims

1. Method for operating a vehicle (1) in automated driving mode, wherein
- a rear area of the vehicle (1) is continuously monitored,
- in the event of a detected critical approach of a following vehicle (2) to the vehicle (1), a warning message (W) is output to the following vehicle (2)
**characterized in that**
- in the event that the following vehicle (2) continues the critical approach to the vehicle (1) after a predeterminable period of time, a takeover request with regard to a driving task is output to a vehicle user of the vehicle (1).

2. Method according to claim 1,
**characterized in that** in the event that the driving task has not been taken over after a predeterminable further period of time, a current driving speed of the vehicle (1) is reduced by a predeterminable value until the critical approach between the following vehicle (2) and the vehicle (1) no longer exists.

3. Method according to claim 2,
**characterized in that** after the further time period has elapsed, the vehicle (1) is controlled in such a way that it positions itself in a right-hand side region within its lane (F1) in the case of right-hand traffic or in a left-hand side region within its lane (F2) in the case of left-hand traffic.

4. Method according to any of the preceding claims,
**characterized in that** the warning message (W) is output to the following vehicle (2) as a text message on a display unit (6) of the vehicle (1) arranged at the rear thereof.

5. Method according to any of the preceding claims,
**characterized in that** the warning message (W) is transmitted to the following vehicle (2) by means of vehicle-to-vehicle communication.

6. Method according to any of the preceding claims,
**characterized in that** the time period before the takeover request is output in the vehicle (1) is at least 30 seconds.

## Revendications

1. Procédé permettant de faire fonctionner un véhicule (1) dans le mode de conduite automatisé, dans lequel
- un espace arrière de véhicule du véhicule (1) est surveillé en continu,
- en cas d'approche critique détectée d'un véhicule (2) qui suit le véhicule (1), un avertissement (W) est émis à l'intention du véhicule (2) qui suit
**caractérisé en ce**
- **que**, dans le cas où le véhicule (2) qui suit continue à s'approcher de manière critique du véhicule (1) après une durée pouvant être prédéfinie, une demande de prise en charge relative à une tâche de conduite est émise à un utilisateur de véhicule du véhicule (1).

2. Procédé selon la revendication 1,
**caractérisé en ce que,** dans le cas où une prise en charge de la tâche de conduite n'a pas eu lieu après une durée supplémentaire pouvant être prédéfinie, une vitesse de conduite momentanée du véhicule (1) est réduite d'une valeur pouvant être prédéfinie jusqu'à ce que le rapprochement critique entre le véhicule (2) qui suit et le véhicule (1) n'existe plus.

3. Procédé selon la revendication 2,
**caractérisé en ce que** le véhicule (1) est commandé après l'écoulement de la durée supplémentaire de telle sorte que celui-ci se range dans une zone de bordure droite à l'intérieur de sa voie de circulation (F1) en cas de circulation à droite ou dans une zone de bordure gauche à l'intérieur de sa voie de circulation (F2) en cas de circulation à gauche.

4. Procédé selon l'une des revendications précédentes,
**caractérisé en ce que** l'avertissement (W) à l'intention du véhicule (2) qui suit est émis sous forme de message textuel sur une unité d'affichage (6) du véhicule (1) disposée côté arrière.

5. Procédé selon l'une des revendications précédentes,
**caractérisé en ce que** l'avertissement (W) est transmis au véhicule (2) qui suit au moyen d'une communication de véhicule à véhicule.

6. Procédé selon l'une des revendications précédentes,
**caractérisé en ce que** la durée avant que la demande de prise en charge ne soit émise dans le véhicule (1) est d'au moins 30 secondes.
